# EUROPÄISCHE PATENTSCHRIFT

(11) **EP 2 714 448 B1**
(45) Veröffentlichungstag und Bekanntmachung des Hinweises auf die Patenterteilung: **05.06.2019**
(21) Anmeldenummer: 12718631.0
(22) Anmeldetag: 25.04.2012
(51) Int. Cl.: B60K 6/442, B60K 6/48, B60K 6/485

(54) **ANTRIEBSSTRANG FÜR EIN KRAFTFAHRZEUG**
DRIVE TRAIN FOR A MOTOR VEHICLE
CHAÎNE CINÉMATIQUE D'UN VÉHICULE AUTOMOBILE

(30) Priorität: 23.05.2011 DE 102011102267
(43) Veröffentlichungstag der Anmeldung: 09.04.2014
(73) Patentinhaber: Magna PT B.V. & Co. KG, 74199 Untergruppenbach (DE)
(72) Erfinder: RUEHLE, Guenter, 74369 Löchgau (DE); BAUSCH, Jochen, 74321 Bietigheim (DE); SCHWEIHER, Mark, 74348 Lauffen (DE); MEISSNER, Jörg, 74626 Bretzfeld (DE)
(74) Vertreter: Rausch, Gabriele
(86) Internationale Anmeldenummer: PCT/EP2012/057525
(87) Internationale Veröffentlichungsnummer: WO 2012/159840

(56) Entgegenhaltungen:
- EP-A2- 1 205 330
- DE-A1-102008 002 381
- US-A1- 2004 147 365

## Beschreibung

Die vorliegende Erfindung betrifft einen Antriebsstrang für ein Kraftfahrzeug, der eine erste elektrische Maschine zur Bereitstellung von Antriebsleistung aufweist, die über eine erste Getriebeanordnung auf ein Differential einer angetriebenen Achse des Kraftfahrzeuges übertragen werden kann. Ferner weist der Antriebsstrang einen Verbrennungsmotor und eine zweite elektrische Maschine auf, die mit dem Verbrennungsmotor gekoppelt ist, um in einem Generatorbetrieb den elektrischen Energiespeicher zu laden. Ferner ist eine zweite Getriebeanordnung vorgesehen, die dazu ausgelegt ist, den Verbrennungsmotor mit dem Differential zu verbinden.

Ein derartiger Antriebsstrang ist unter der Bezeichnung "Range-Extender" bekannt. Ein solcher Antriebsstrang ist dazu ausgelegt, das Fahrzeug über die erste elektrische Maschine mit Antriebsleistung zu versorgen. Um die Reichweite des Kraftfahrzeuges zu erhöhen, ist der Verbrennungsmotor vorgesehen, der den elektrischen Energiespeicher über die zweite elektrische Maschine laden kann, gegebenenfalls auch während elektrische Leistung aus dem Energiespeicher über die erste elektrische Maschine entnommen wird. Gegenüber einem reinen Elektrofahrzeug kann hierdurch die Reichweite deutlich verlängert werden.

Ferner ist bei einem solchen Antriebsstrang in der Regel vorgesehen, dass das Kraftfahrzeug auch verbrennungsmotorisch angetrieben werden kann.

Die hierzu verwendete zweite Getriebeanordnung kann ein herkömmliches Kraftfahrzeuggetriebe mit einer Vielzahl von Gangstufen aufweisen. Dies erhöht jedoch wiederum das Fahrzeuggewicht.

Entsprechende Antriebsstränge sind beispielsweise in den Druckschriften EP 1 205 330 A2 und US 2004/0147365 A1 beschrieben.

Es ist daher die Aufgabe der vorliegenden Erfindung, einen Antriebsstrang für ein Kraftfahrzeug anzugeben, der als Range-Extender-Antriebsstrang ausgelegt ist sowie kostengünstig und mit geringem Gewicht realisiert werden kann.

Diese Aufgabe wird durch einen Antriebsstrang für ein Kraftfahrzeug gemäß Anspruch 1 gelöst, wobei

die Übersetzungen der ersten und der zweiten Getriebestufe so gewählt sind, dass ein Antrieb des Fahrzeuges mittels des Verbrennungsmotors bestimmungsgemäß nur bei Fahrzeuggeschwindigkeiten größer 30 km/h möglich ist.

Unter einem bestimmungsgemäßen Antrieb wird hierbei verstanden, dass die jeweils leistungsübertragende Kupplung vollständig oder nahezu vollständig geschlossen ist, also im Falle einer Lastschaltkupplung im Wesentlichen nicht schlupft (Mikroschlupf).

Auf diese Weise ist vorgesehen, dass ein verbrennungsmotorischer Antrieb in der Regel nur bei höheren Fahrzeuggeschwindigkeiten möglich ist. Zwei Gangstufen sind hierfür hinreichend.

Von besonderem Vorzug ist es, wenn die Geschwindigkeitsschwelle bei größer 50 km/h liegt, insbesondere bei größer 80 km/h.

Vorzugsweise weist die zweite Getriebeanordnung ausschließlich die erste Gangstufe und die zweite Gangstufe auf.

Bei dem erfindungsgemäßen Antriebsstrang wird der Verbrennungsmotor vorzugsweise nur in einem eingeschränkten Geschwindigkeitsbereich des Kraftfahrzeuges eingesetzt. Daher ist die Verwendung von nur zwei Gangstufen in der zweiten Getriebeanordnung in der Regel hinreichend.

Demzufolge kann die zweite Getriebeanordnung des Antriebsstranges mit geringen Kosten und geringem Gewicht realisiert werden. Die Aufgabe wird somit vollkommen gelöst.

Gemäß einer vorteilhaften Ausführungsform weist die Kupplungsanordnung eine erste Kupplung und eine zweite Kupplung auf. Hierdurch ist es möglich, die erste Gangstufe mittels der ersten Kupplung und die zweite Gangstufe mittels der zweiten Kupplung ein- und auszulegen.

Gemäß einer besonders bevorzugten Ausführungsform weist die erste und/oder die zweite Kupplung eine formschlüssige Schaltkupplung auf.

Derartige formschlüssige Schaltkupplungen können bspw. zu einem Schaltkupplungspaket zusammengefasst werden, das zwischen zwei Losrädern angeordnet ist. Die Schaltkupplung kann dabei als synchronisierte Schaltkupplung ausgeführt sein.

Bei dieser Ausführungsform kann die Kupplungsanordnung kostengünstig hergestellt werden, da formschlüssige Schaltkupplungen dieser Art in hohen Stückzahlen bspw. für manuelle Schaltgetriebe hergestellt werden. Zudem ermöglicht die formschlüssige Ausgestaltung der Kupplung, dass im laufenden Betrieb mittels Verbrennungsmotor keine Energie zum Schließen der Kupplung notwendig ist.

Ein Anfahren des Kraftfahrzeuges mittels eines derartigen Antriebsstranges kann bspw. über eine zwischen dem Verbrennungsmotor und der Kupplungsanordnung angeordnete Anfahr- und Trennkupplung erfolgen, bspw. als Trockenkupplung oder als nasslaufende Lamellenkupplung. Alternativ oder zusätzlich ist es möglich, ein Anfahren über die erste elektrische Maschine zu realisieren.

Gemäß einer alternativen Ausführungsform weist die Kupplungsanordnung eine erste Kupplung und eine zweite Kupplung auf, von denen wenigstens eine als Lastschaltkupplung ausgebildet ist.

Bei dieser Ausführungsform kann die wenigstens eine Lastschaltkupplung nicht nur dazu verwendet werden, um die zugehörige Gangstufe zu schalten. Vielmehr kann die Lastschaltkupplung im Gegensatz zu einer Synchronkupplung beispielsweise auch zum Anfahren verwendet werden. In letzterem Fall ist es beispielsweise möglich, bei Ausfall der elektrischen Maschine das Fahrzeug rein verbrennungsmotorisch zu betreiben, auch wenn in diesem Fall ein Anfahrvorgang die Überwindung einer hohen Differenzdrehzahl in der Lastschaltkupplung bedeuten kann.

Von Vorteil bei dieser Ausführungsform ist ferner, dass eine von den Gangstufen-Kupplungen separate Anfahr- und/oder Trennkupplung nicht notwendig ist.

Gemäß einer weiteren Ausführungsform ist es möglich, eine der zwei Kupplungen als Lastschaltkupplung und die andere Kupplung als formschlüssige Schaltkupplung zu realisieren.

Der Begriff der Lastschaltkupplung bezieht sich vorliegend allgemein auf eine Reibkupplung, die auch schlupfend Antriebsleistung übertragen kann. Der Begriff der Lastschaltkupplung soll nicht bedeuten, dass Wechsel zwischen den Gangstufen unter Last erfolgen können. Bei der Verwendung einer Lastschaltkupplung für jede der zwei Gangstufen sind jedoch generell auch Gangstufenwechsel unter Last möglich, insbesondere auch ohne Zugkraftunterbrechung.

Von besonderem Vorteil ist es hierbei, wenn die Lastschaltkupplung als nasslaufende Lamellenkupplung ausgebildet ist.

Derartige nasslaufende Lamellenkupplungen bauen zum einen kompakt und sind zum anderen auch zur Übertragung von großer Antriebsleistung konfigurierbar.

Insgesamt ist es ferner bevorzugt, wenn die Kupplungsanordnung bzw. die erste und die zweite Kupplung koaxial zu einer Verbindungswelle angeordnet sind, mittels der die zweite elektrische Maschine und der Verbrennungsmotor miteinander gekoppelt sind.

Diese Ausführungsform ermöglicht eine kompakte Anbindung der Verbindungswelle an die zweite Getriebeanordnung.

Gemäß einer weiteren bevorzugten Ausführungsform ist vorgesehen, die zweite elektrische Maschine drehfest mit einer Ausgangswelle des Verbrennungsmotors zu verbinden.

Die Verbindung kann beispielsweise über eine Verbindungswelle erfolgen. Dabei kann die Verbindung gegebenenfalls über einen Schwingungsdämpfer erfolgen, der eine begrenzte Verdrehbarkeit zwischen der Ausgangswelle des Verbrennungsmotors und der zweiten elektrischen Maschine vorsieht und dazu ausgelegt ist, die von dem Verbrennungsmotor erzeugten Drehschwingungen zu dämpfen.

Wenn wenigstens eine der zwei Kupplungen für die zwei Gangstufen als Schaltkupplung ausgelegt ist, kann die Verbindungswelle dabei als Vollwelle ausgebildet sein. Insbesondere ist es bei Verwendung einer Lastschaltkupplung nicht notwendig, die Ausgangswelle des Verbrennungsmotors und die Ausgangswelle der zweiten elektrischen Maschine über eine separate Trennkupplung miteinander zu verbinden. Hierdurch kann weiterer Bauraum eingespart werden.

Ferner ist es gemäß einer weiteren insgesamt bevorzugten Ausführungsform vorgesehen, dass die zweite Getriebeanordnung ein erstes Losrad aufweist, das der ersten Gangstufe zugeordnet ist, und ein zweites Losrad aufweist, das der zweiten Gangstufe zugeordnet ist, wobei das erste und das zweite Losrad koaxial zu einer Verbindungswelle angeordnet sind, mittels der die zweite elektrische Maschine und der Verbrennungsmotor miteinander gekoppelt sind. Insbesondere dann, wenn auch die erste und die zweite Kupplung für die zwei Gangstufen koaxial zu der Verbindungswelle angeordnet sind, kann Antriebsleistung gegebenenfalls auf einfache Weise von der Verbindungswelle über eine der zwei Gangstufen der zweiten Getriebeanordnung auf das Differential geführt werden.

Dabei ist es von besonderem Vorzug, wenn das erste und das zweite Losrad direkt an der Verbindungswelle drehbar gelagert sind.

Hierdurch kann auch in radialer Richtung weiterer Bauraum eingespart werden. Aufwändige Hohlwellenkonstruktionen, die beim Vorsehen einer Trennkupplung im Bereich der Verbindungswelle vorgesehen werden müssten, können auf diese Weise vermieden werden.

Auch ist es allgemein bevorzugt, wenn die Kupplungsanordnung eine erste und eine zweite Kupplung aufweist, die koaxial zu der Verbindungswelle angeordnet sind, wobei das erste und das zweite Losrad in axialer Richtung zwischen der ersten und der zweiten Kupplung angeordnet sind.

Hierdurch kann eine Aktuatorik zum Betätigen der ersten und der zweiten Kupplung auf vergleichsweise einfache Weise in die zweite Getriebeanordnung integriert werden.

Alternativ ist es jedoch auch möglich, die erste und die zweite Kupplung zwischen dem ersten und dem zweiten Losrad anzuordnen.

Eine weitere bevorzugte Ausführungsform sieht vor, dass das erste Losrad mit einem ersten Festrad in Eingriff steht, wobei das zweite Losrad mit einem zweiten Festrad in Eingriff steht, wobei das erste und das zweite Festrad an einer Zwischenwelle festgelegt sind, und wobei an der Zwischenwelle ein Antriebszahnrad festgelegt ist, das mit einem Eingangsglied (beispielsweise einem Zahnrad) des Differentials in Eingriff steht.

Auf diese Weise kann Antriebsleistung alternativ über die erste oder die zweite Gangstufe auf das Differential geführt werden. Ferner ergibt sich die Möglichkeit, geeignete Übersetzungen für die erste und die zweite Gangstufe einzurichten.

Dabei ist es von besonderem Vorzug, wenn das zweite Antriebszahnrad in axialer Richtung auf einer Seite des ersten und des zweiten Festrades angeordnet ist.

Diese Ausführungsform ist insbesondere dann bevorzugt, wenn die zwei Festräder der ersten und der zweiten Gangstufe in axialer Richtung unmittelbar benachbart zueinander angeordnet sind.

Bei einer Ausführungsform, bei der die zwei Kupplungen zwischen den Losrädern angeordnet sind, kann das Antriebszahnrad auch zwischen dem ersten und dem zweiten Festrad angeordnet sein.

Gemäß einer weiteren bevorzugten Ausführungsform ist die Kupplungsanordnung hydraulisch betätigt und/oder gekühlt.

Insbesondere dann, wenn es sich bei den Kupplungen der Kupplungsanordnung um nasslaufende Lamellenkupplungen handelt, ist es bevorzugt, wenn diese Kupplungen mittels eines Hydraulikfluides gekühlt bzw. geschmiert werden. In diesem Fall ist es von besonderem Vorzug, wenn auch die Betätigung der Kupplungen hydraulisch erfolgt, da ein Hydraulikkreis ohnehin vorgesehen wird.

Beim Schalten der Gangstufen kann der Verbrennungsmotor unterstützt durch den Generator auf ein Zieldrehzahlniveau beschleunigt oder verzögert werden. Hierdurch kann die Schaltarbeit in den jeweiligen Kupplungen reduziert werden. Ferner kann das Fahrzeug während einer Schaltung auch weiterhin durch die erste elektrische Maschine angetrieben werden, so dass ebenfalls eine Zugkraftunterbrechung vermieden werden kann.

Sofern die Kupplungen als lastschaltfähige Lamellenkupplungen ausgebildet sind, können diese Kupplungen in kritischen Drehzahlbereichen auch im Mikroschlupf betrieben werden. Durch diese Maßnahme können das Gewicht und das Massenträgheitsmoment eines Torsions- bzw. Schwingungsdämpfers im Bereich einer Verbindungswelle zwischen dem Verbrennungsmotor und der zweiten elektrischen Maschine reduziert werden, ohne dass akustische Nachteile auftreten.

Insgesamt kann der Antriebsstrang mit einer geringen Anzahl von Bauelementen aufgebaut werden. Ferner kann der Antriebsstrang mit geringem Gewicht innerhalb eines geringen Bauraumes bei geringen Kosten realisiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeuges mit einer ersten Ausführungsform eines erfindungsgemäßen Antriebsstranges;
- Fig. 2: eine schematische Darstellung eines Teils einer weiteren Ausführungsform eines erfindungsgemäßen Antriebsstranges; und
- Fig. 2a: eine Detailansicht des Antriebsstranges der Fig. 2 mit einer alternativen Kupplungsanordnung; und
- Fig. 3: eine Kupplungsanordnung für einen erfindungsgemäßen Antriebsstrang.

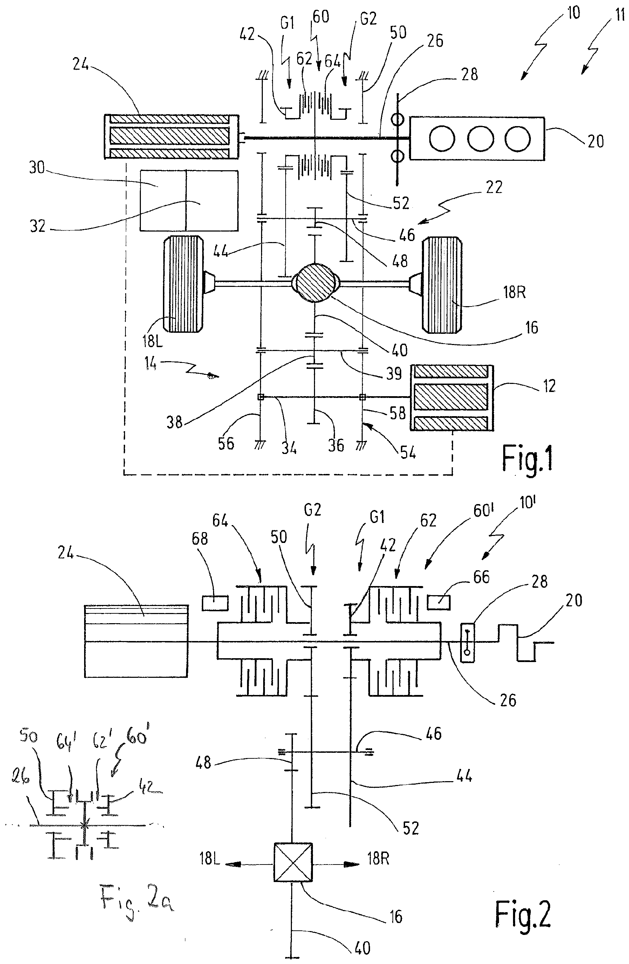

In Fig. 1 ist ein Antriebsstrang eines Kraftfahrzeuges 11 schematisch dargestellt und mit 10 bezeichnet.

Der Antriebsstrang 10 weist eine erste elektrische Maschine 12 auf, die dazu ausgelegt ist, Antriebsleistung für das Kraftfahrzeug 11 bereitzustellen. Ferner weist der Antriebsstrang 10 ein Differential 16 auf, das dazu ausgebildet ist, Antriebsleistung auf zwei angetriebene Räder 18L, 18R (oder auf zwei Achsen) des Kraftfahrzeuges 11 zu verteilen. Antriebsleistung von der ersten elektrischen Maschine 12 wird über eine erste Getriebeanordnung 14 auf das Differential 16 übertragen.

Ferner beinhaltet der Antriebsstrang 10 einen Verbrennungsmotor 20. Von dem Verbrennungsmotor 20 erzeugte Antriebsleistung kann über eine zweite Getriebeanordnung 22 auf das Differential 16 übertragen werden. Der Antriebsstrang 10 beinhaltet ferner eine zweite elektrische Maschine 24, die insbesondere als Generator betrieben wird und über eine Verbindungswelle 26 drehfest mit einer Ausgangswelle (Kurbelwelle) des Verbrennungsmotors 20 verbunden ist. Dabei kann an der Verbindungswelle 26 ein Schwingungs- bzw. Torsionsdämpfer 28 vorgesehen sein, um Drehschwingungen des Verbrennungsmotors 20 zu dämpfen.

Die erste elektrische Maschine 12 und die zweite elektrische Maschine 24 sind mit einer Leistungssteuereinheit 30 verbunden, die wiederum mit einem elektrischen Energiespeicher 32 (Fahrzeugbatterie) verbunden ist.

Der Antriebsstrang (10) ist als Range-Extender-Antriebsstrang ausgelegt. Beispielsweise kann das Fahrzeug rein elektromotorisch über die erste elektrische Maschine 12 fahren. Sofern das Ladungsniveau des elektrischen Energiespeichers 32 unter ein bestimmtes Grenzniveau abfällt, kann der Verbrennungsmotor 20 gestartet werden, um auf diese Weise die zweite elektrische Maschine 24 als Generator anzutreiben, über den der elektrische Energiespeicher 32 wieder aufgeladen wird.

Ferner ist ein rein verbrennungsmotorischer Antrieb über die zweite Getriebeanordnung 22 möglich, jedoch ausschließlich in Geschwindigkeitsbereichen oberhalb von 30 km/h, bevorzugt oberhalb von 50 km/h, und besonders bevorzugt oberhalb von 80 km/h.

Die erste Getriebeanordnung 14 weist eine erste Antriebswelle 34 auf, die mit einer Ausgangswelle der ersten elektrischen Maschine 12 gekoppelt ist. An der ersten Antriebswelle ist ein Zahnrad 36 festgelegt, das mit einem ersten Antriebszahnrad (erstes Antriebsritzel) 38 in Eingriff steht. Das erste Antriebszahnrad 38 ist an einer ersten Zwischenwelle 39 festgelegt, die parallel zu der ersten Antriebswelle 34 ausgerichtet ist. Das erste Antriebszahnrad 38 steht in Eingriff mit einem Eingangsglied (beispielsweise einem Zahnrad) des Differentials 16.

Die erste Antriebswelle 34 und die erste Zwischenwelle 39 sind quer zu einer Längsachse des Kraftfahrzeuges 11 ausgerichtet, insbesondere etwa parallel zu der angetriebenen Achse der Räder 18L, 18R.

Die zweite Getriebeanordnung 22 weist eine erste Gangstufe G1 und eine zweite Gangstufe G2 auf. Der Verbrennungsmotor 20 kann folglich über die unterschiedlichen Übersetzungen der ersten und der zweiten Gangstufe G1, G2 mit dem Differential 16 verbunden werden.

Die erste Gangstufe G1 beinhaltet ein erstes Losrad 42, das drehbar an der Verbindungswelle 26 gelagert ist. Das erste Losrad 42 steht mit einem ersten Festrad 44 in Eingriff, das an einer zweiten Zwischenwelle 46 festgelegt ist. An der zweiten Zwischenwelle 46 ist ferner ein zweites Antriebszahnrad 48 (zweites Antriebsritzel) festgelegt, das mit dem Eingangsglied 40 des Differentials 16 in Eingriff steht.

Die zweite Gangstufe G2 weist ein zweites Losrad 50 auf, das drehbar an der Verbindungswelle 26 gelagert ist, sowie ein zweites Festrad 52, das drehfest mit der zweiten Zwischenwelle 46 verbunden ist.

Das zweite Antriebszahnrad 48 ist in axialer Richtung der zweiten Zwischenwelle 46 zwischen dem ersten Festrad 44 und dem zweiten Festrad 52 angeordnet.

Die zweite Zwischenwelle 46 und die Verbindungswelle 26 sind ebenfalls quer zu einer Längsachse des Kraftfahrzeuges 11 ausgerichtet, und insbesondere parallel zu der ersten Antriebswelle 34 und der ersten Zwischenwelle 39.

Der Antriebsstrang 10 weist ferner ein Gehäuse 54 auf, das eine erste, sich im Wesentlichen parallel zur Längsachse des Kraftfahrzeuges 11 erstreckende Gehäusewand 56 und eine zweite, sich im Wesentlichen parallel zu der Längsachse des Kraftfahrzeuges erstreckende zweite Gehäusewand 58 aufweist. Die erste Antriebswelle 34, die erste Zwischenwelle 39 sowie die zweite Zwischenwelle 46 und gegebenenfalls die Verbindungswelle 26 sind drehbar in Bezug auf das Gehäuse 54 gelagert, vorzugsweise mittels jeweiliger Radiallager an der ersten Gehäusewand 56 und der zweiten Gehäusewand 58.

Zum Schalten der zwei Gangstufen G1, G2 ist eine Kupplungsanordnung 60 vorgesehen. Die Kupplungsanordnung 60 weist eine erste Kupplung 62 und eine zweite Kupplung 64 auf. Die erste und die zweite Kupplung 62, 64 sind in axialer Richtung der Verbindungswelle 26 zwischen dem ersten Losrad 42 und dem zweiten Losrad 50 angeordnet. Die erste und die zweite Kupplung 62, 64 sind jeweils als Lastschaltkupplungen, insbesondere als nasslaufende Lamellenkupplungen, ausgebildet. Die erste Kupplung 62 und die zweite Kupplung 64 weisen ein gemeinsames Eingangsglied auf, das drehfest mit der Verbindungswelle 26 verbunden ist. Ein Ausgangsglied der ersten Kupplung 62 ist mit dem ersten Losrad 42 verbunden. Ein Ausgangsglied der zweiten Kupplung 64 ist mit dem zweiten Losrad 50 verbunden.

Die erste und die zweite Kupplung 62, 64 können bei einer geeigneten Aktuatorik so angesteuert werden, dass sie bei einem Gangwechsel überschneidend betätigt werden, um Zugkraftunterbrechungen zu vermeiden. Bevorzugt werden die zwei Kupplungen 62, 64 jedoch mittels einer Aktuatoranordnung betätigt, die eine Umschaltung von einer Gangstufe auf eine andere Gangstufe nur mit Zugkraftunterbrechung ermöglicht, wie es nachstehend noch beschrieben werden wird. Eine derartige Aktuatoranordnung ist bevorzugt als hydraulische Aktuatoranordnung ausgebildet, zumal es bei nasslaufenden Lamellenkupplungen in der Regel auch notwendig ist, diese mittels eines Fluides zu schmieren bzw. zu kühlen.

Alternativ kann die Kupplungsanordnung auch mit zwei Kupplungen in Form von formschlüssigen Schaltkupplungen realisiert werden, die bspw. hydraulisch oder elektrisch betätigt werden. Zugkraftunterbrechungen können dabei ggf. vermieden werden, indem die erste elektrische Maschine bei Gangwechseln Zugkraft bereitstellt.

Die durch die erste und die zweite Gangstufe G1, G2 eingerichteten Übersetzungen ermöglichen im bestimmungsgemäßen Betrieb einen Antrieb des Kraftfahrzeuges 11 in Geschwindigkeiten oberhalb der oben genannten Geschwindigkeitsschwellen (beispielsweise größer 30 km/h). Sofern zumindest eine der zwei Kupplungen 62, 64 als Lastschaltkupplung ausgebildet ist, ist jedoch in einem Notbetrieb auch ein Anfahren über den Verbrennungsmotor 20 möglich.

In Fig. 2 ist ein Teil einer alternativen Ausführungsform eines Antriebsstranges 10' gezeigt. Der Antriebsstrang 10' entspricht hinsichtlich Aufbau und Funktionsweise generell dem Antriebsstrang 10 der Fig. 1. Gleiche Elemente sind daher mit gleichen Bezugsziffern versehen. Im Folgenden werden im Wesentlichen die Unterschiede erläutert.

Bei dem Antriebsstrang 10' sind das erste und das zweite Losrad 42, 50 zueinander benachbart angeordnet. Die Kupplungsanordnung 60' weist eine erste Kupplung 62 für die erste Gangstufe G1 auf, die in axialer Richtung gesehen zwischen dem ersten Losrad 42 und dem Verbrennungsmotor 20 angeordnet ist. Die zweite Kupplung 64 ist in axialer Richtung gesehen zwischen dem zweiten Losrad 50 und der zweiten elektrischen Maschine 24 angeordnet.

Die erste Kupplung 62 wird mittels eines schematisch angedeuteten ersten Hydraulikzylinders 66 betätigt, und die zweite Kupplung 64 wird mittels eines schematisch angedeuteten zweiten Hydraulikzylinders 68 betätigt. Die Betätigungsrichtungen der Hydraulikzylinder 66, 68 weisen aufeinander zu.

Das zweite Antriebszahnrad 48 ist in axialer Richtung gesehen neben den zwei Festrädern 44, 52 angeordnet und steht mit dem Eingangsglied 40 des Differentials 16 in Eingriff. Der Aufbau des Antriebsstranges 10' entspricht dem des Antriebsstranges 10 der Fig. 1, soweit die erste elektrische Maschine 12 und die erste Getriebeanordnung 14 betroffen sind.

Bei dem Antriebsstrang 10' weisen die erste und die zweite Kupplung 62, 64 jeweils ein eigenes Eingangsglied auf, das drehfest mit der Verbindungswelle 26 verbunden ist. Durch die in axialer Richtung außen angreifenden Hydraulikzylinder 66, 68 kann jedoch der hierfür benötigte Bauraum leichter in den vorhandenen Gesamtbauraum integriert werden.

Fig. 2 a zeigt eine alternative Ausführungsform einer Kupplungsanordnung 60', bei der die erste Kupplung 62' und die zweite Kupplung 64' als formschlüssige Schaltkupplungen ausgebildet sind, die vorzugsweise in einem Schaltkupplungspaket zwischen den Losrädern 42, 50 zusammengefasst sind.

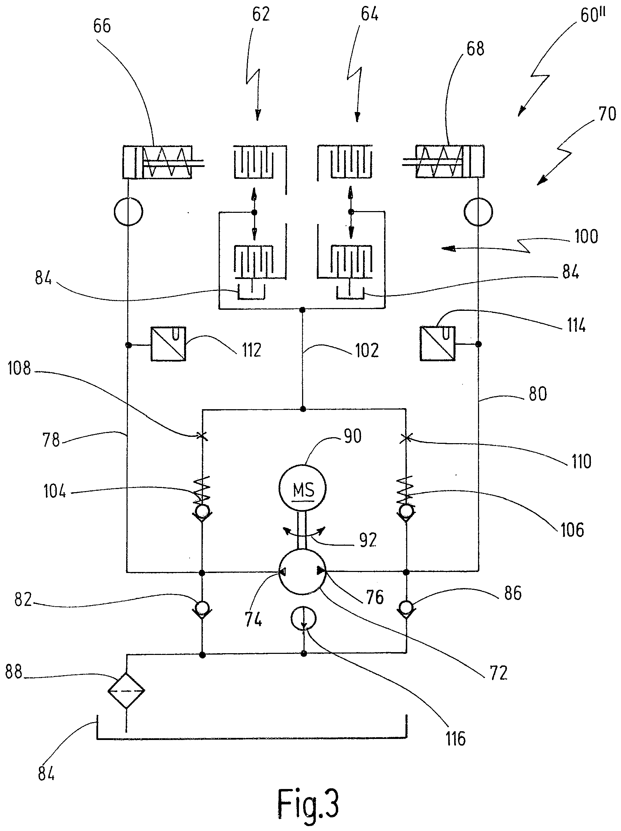

In Fig. 3 ist in schematischer Form eine Ausführungsform einer Kupplungsanordnung 60" gezeigt, die zur Verwendung in den Antriebssträngen 10, 10' der Fig. 1 und 2 verwendbar ist.

Die Kupplungsanordnung 60" der Fig. 3 weist eine Aktuatoranordnung 70 mit einer einzelnen Aktuatorpumpe 72 auf. Die Aktuatorpumpe 72 weist einen ersten Anschluss 74 und einen zweiten Anschluss 76 auf. Der erste Anschluss 74 ist über eine erste Verbindungsleitung 78 direkt mit einem ersten Hydraulikzylinder 66 zum Betätigen der ersten Kupplung 62 verbunden. Der zweite Anschluss 76 ist über eine zweite Verbindungsleitung 80 direkt mit einem zweiten Hydraulikzylinder 68 zum Betätigen der zweiten Kupplung 64 verbunden.

Der erste Anschluss 74 ist ferner über ein erstes Rückschlagventil 82 (erstes Schnüffelventil) mit einem Tank 84 verbunden. Der zweite Anschluss 76 ist über ein zweites Rückschlagventil 86 (zweites Schnüffelventil) mit dem Tank 84 verbunden. Die Verbindung kann dabei ein Fluidfilter 88 beinhalten, das zwischen den Rückschlagventilen 82, 86 und dem Tank 84 angeordnet ist.

Die Aktuatorpumpe 72 wird mittels eines Elektromotors 90 angetrieben, der als eigener Aktuatormotor ausgebildet ist und unabhängig von der ersten und der zweiten elektrischen Maschine 12, 24 betreibbar ist.

Der Elektromotor 90 ist dazu ausgelegt, die Aktuatorpumpe 72 in zwei Drehrichtungen anzutreiben, wie es in Fig. 3 bei 92 gezeigt ist.

In der ersten Drehrichtung ist der erste Anschluss 74 ein Druckanschluss und der zweite Anschluss 76 ein Sauganschluss, der über das zweite Rückschlagventil 86 Fluid aus dem Tank 84 ansaugt. In der zweiten Drehrichtung ist der erste Anschluss 74 ein Sauganschluss, der Fluid über das erste Rückschlagventil 82 aus dem Tank 84 ansaugt, und der zweite Anschluss 76 ist ein Druckanschluss. In der ersten Drehrichtung verhindert das erste Rückschlagventil 82, dass Fluid zurück in den Tank 84 strömt. In der zweiten Drehrichtung verhindert das zweite Rückschlagventil 86, dass Fluid zurück in den Tank 84 strömt.

Die Aktuatoranordnung 70 ist als eine Art bidirektionaler Pumpenaktuator ausgebildet. Die Steuerung des Weges und/oder des Druckes der zwei Hydraulikzylinder 66, 68 kann dabei über die Drehzahl des Elektromotors 90 und damit über den von der Aktuatorpumpe 72 jeweils bereitgestellten Volumenstrom geregelt bzw. gesteuert werden. Um die Steuer- bzw. Regelbarkeit zu verbessern, kann vorgesehen sein, die erste und/oder die zweite Verbindungsleitung 78, 80 über eine Blende mit dem Tank 84 zu verbinden.

Vorliegend dient die Aktuatoranordnung 70 jedoch auch dazu, die erste und die zweite Kupplung 62, 64 mit Schmierfluid zu versorgen. Hierzu weist die Aktuatoranordnung 70 einen Schmierkreis 100 auf, der eine Schmierfluidleitung 102 beinhaltet. Die Schmierfluidleitung 102 ist über geeignete Leitungen mit der ersten und der zweiten Kupplung 62, 64 verbunden, insbesondere mit radial innen liegenden Abschnitten der zwei Kupplungen 62, 64, um diese von radial innen mit Schmierfluid zu versorgen. Das Schmierfluid wird anschließend wieder dem Tank zugeführt, wie es schematisch unterhalb der zwei Kupplungen 62, 64 bei 84 gezeigt ist.

Die Schmierfluidleitung 102 ist über ein drittes Rückschlagventil 104 mit dem ersten Anschluss 74 verbunden. Ferner ist die Schmierfluidleitung 102 über ein viertes Rückschlagventil 106 mit dem zweiten Anschluss 76 der Aktuatorpumpe 72 verbunden. Das dritte und das vierte Rückschlagventil 104, 106 können vorzugsweise federbelastete Rückschlagventile sein, wie es in Fig. 3 schematisch angedeutet ist.

Ferner ist zwischen dem dritten Rückschlagventil 104 und der Schmierfluidleitung 102 eine erste Blende 108 vorgesehen. Zwischen dem vierten Rückschlagventil 106 und der Schmierfluidleitung 102 ist eine zweite Blende 110 vorgesehen.

In der ersten Drehrichtung, bei der der erste Anschluss 74 ein Druckanschluss ist, wird folglich über das dritte Rückschlagventil 104 und die erste Blende 108 Fluid der Schmierfluidleitung 102 zugeführt. Die erste Blende 108 dient dabei als Leckageblende und verbessert die Steuer- bzw. Regelbarkeit des Drucks in der ersten Verbindungsleitung 78. In der ersten Drehrichtung wird über den zweiten Anschluss 76 Fluid angesaugt, so dass das vierte Rückschlagventil 106 geschlossen ist.

In der zweiten Drehrichtung ist der zweite Anschluss 76 ein Druckanschluss, so dass Fluid über das vierte Rückschlagventil 106 und die zweite Blende 110 der Schmierfluidleitung 102 zugeführt wird. Auch hierbei dient die zweite Blende 110 zur Verbesserung der Regelbarkeit. In der zweiten Drehrichtung ist der erste Anschluss 74 ein Sauganschluss, so dass das dritte Rückschlagventil 104 geschlossen ist.

Optional ist vorgesehen, an der ersten Verbindungsleitung 78 einen ersten Drucksensor 112 vorzusehen, um den Fluiddruck in der ersten Verbindungsleitung 78 zu messen und gegebenenfalls regeln zu können. In entsprechender Weise kann ein zweiter Drucksensor 114 an der zweiten Verbindungsleitung 80 vorgesehen sein.

Schließlich kann im Bereich einer die Rückschlagventile 82, 86 mit dem Tank 84 verbindenden Leitung ein Temperatursensor 116 vorgesehen sein, der ebenfalls bevorzugt dafür dient, Steuer- bzw. Regelkennlinien einer nicht mehr dargestellten Steuereinrichtung in Abhängigkeit von der Temperatur des Fluides anzupassen.

Die erste und die zweite Kupplung 62, 64 sind vorzugsweise als normalerweise geöffnete Kupplungen ("normally open") ausgeführt. Der erste und der zweite Hydraulikzylinder 66, 68 können dabei als einseitig wirkende Hydraulikzylinder ausgebildet sein, die optional mit einer mechanischen Rückstellfeder ausgestattet sind, wie es in Fig. 3 gezeigt ist.

Da bei dieser Ausführungsform der Aktuatoranordnung 70 nur entweder der erste oder der zweite Hydraulikzylinder 66, 68 mit Druck versorgt wird, ist es bei dieser Ausgestaltung nicht möglich, Gangwechsel unter Last durchzuführen. Dies ist jedoch bei dieser Art von Antriebsstrang in der Regel nicht gefordert.

Durch die dargestellte Aktuatoranordnung 70 ist es möglich, das Hydrauliksystem bei der Befüllung der ersten oder der zweiten Verbindungsleitung 78, 80 zu entlüften. Ferner wird vermieden, dass durch die Aktuatorpumpe 72 Luft in das Hydrauliksystem gepumpt wird. Die zur Verbesserung der Regelbarkeit vorgesehenen Blenden sind in diesem Fall nicht direkt mit den Verbindungsleitungen 78, 80 verbunden, sondern sind in den Schmierkreis 100 integriert. Die durch die Leckageblende gewollte Leckage wird folglich nicht auf direktem Wege dem Tank 84 zugeführt, sondern wird den beiden Kupplungen 62, 64 zur Schmierung zugeführt. Hierdurch kann eine zusätzliche Schmierfluidpumpe entfallen. Die Rückschlagventile 104, 106 ermöglichen, unabhängig von der Drehrichtung der Aktuatorpumpe 72, Schmieröl den Kupplungen 62, 64 zur Verfügung zu stellen, ohne Gefahr zu laufen, dass von der Aktuatorpumpe 72 Luft angesaugt wird. Zur Sicherstellung der Funktion sind das dritte und das vierte Rückschlagventil 104, 106 jeweils vorzugsweise mit einer Vorlastfeder ausgerüstet, wie oben erwähnt.

Die Aktuatoranordnung 70 kann mit wenigen Bauteilen realisiert werden. Die Gangstufen G1, G2 können hierbei geschaltet werden, ohne dass mechanische Schaltungskomponenten, wie beispielsweise Schaltwalzen, Schaltstangen oder Ähnliches, erforderlich sind. Die Aktuatorpumpe 72 mit dem angekoppelten Elektromotor 90 kann an einem bauraumgünstigen Platz innerhalb des Antriebsstranges 10 angeordnet werden. Insgesamt ergeben sich im Vergleich zu einer herkömmlichen Schaltaktuatorik deutliche Bauraum- und Gewichtsvorteile.

Anstelle einer einzelnen Schmierfluidleitung 102 können auch zwei Schmierfluidleitungen vorgesehen sein, von denen eine die erste Blende 108 mit der ersten Kupplung 62 verbindet, und von denen die zweite Leitung die zweite Blende 110 mit der zweiten Kupplung 64 verbindet. Hierdurch kann gegebenenfalls der relativ kleine Volumenstrom besser ausgenutzt werden, da in diesem Fall jene Kupplung mit Schmieröl versorgt wird, die gerade betätigt wird.

## Patentansprüche

1. Antriebsstrang (10) für ein Kraftfahrzeug (11), mit
- einer ersten elektrischen Maschine (12) zur Bereitstellung von Antriebsleistung, wobei die erste elektrische Maschine (12) mit einem elektrischen Energiespeicher (32) verbunden ist;
- einem Differential (16), das Antriebsleistung auf zwei angetriebene Räder (18L, 18R) oder Achsen des Kraftfahrzeuges (11) verteilen kann;
- einer ersten Getriebeanordnung (14), die die erste elektrische Maschine (12) mit dem Differential (16) verbindet;
- einem Verbrennungsmotor (20);
- einer zweiten elektrischen Maschine (24), die mit dem Verbrennungsmotor (20) gekoppelt ist, um in einem Generatorbetrieb den elektrischen Energiespeicher (32) zu laden; und
- einer zweiten Getriebeanordnung (22), die den Verbrennungsmotor (20) mit dem Differential (16) verbindet;
wobei die zweite Getriebeanordnung (22) eine erste Gangstufe (G1) und eine zweite Gangstufe (G2) aufweist, die mittels einer Kupplungsanordnung (60) alternativ zur Übertragung von Antriebsleistung von dem Verbrennungsmotor (20) zu dem Differential (16) schaltbar sind, **dadurch gekennzeichnet, dass** die Übersetzungen der ersten und der zweiten Getriebestufe (G1, G2) so gewählt sind, dass ein Antrieb des Fahrzeuges (11) mittels des Verbrennungsmotors (20) bestimmungsgemäß nur bei Fahrzeuggeschwindigkeiten größer 30 km/h möglich ist.

2. Antriebsstrang nach Anspruch 1, wobei die Kupplungsanordnung (60) eine erste Kupplung (62) und eine zweite Kupplung (64) aufweist.

3. Antriebsstrang nach Anspruch 2, wobei die erste und/oder die zweite Kupplung (62, 64) eine formschlüssige Schaltkupplung aufweist

4. Antriebsstrang nach einem der Ansprüche 1 bis 3, wobei die Kupplungsanordnung (60) koaxial zu einer Verbindungswelle (26) angeordnet ist, mittels der die zweite elektrische Maschine (24) und der Verbrennungsmotor (20) miteinander gekoppelt sind.

5. Antriebsstrang nach einem der Ansprüche 1 bis 4, wobei die zweite elektrische Maschine (24) drehfest mit einer Ausgangswelle des Verbrennungsmotors (20) verbunden ist.

6. Antriebsstrang nach einem der Ansprüche 1 bis 5, wobei die zweite Getriebeanordnung (22) ein erstes Losrad (42), das der ersten Getriebestufe (G1) zugeordnet ist, und ein zweites Losrad (50) aufweist, das der zweiten Getriebestufe (G2) zugeordnet ist, wobei das erste und das zweite Losrad (42, 50) koaxial zu einer Verbindungswelle (26) angeordnet sind, mittels der die zweite elektrische Maschine (24) und der Verbrennungsmotor (20) miteinander gekoppelt sind.

7. Antriebsstrang nach Anspruch 6, wobei das erste und das zweite Losrad (42, 50) direkt an der Verbindungswelle (26) drehbar gelagert sind.

8. Antriebsstrang nach Anspruch 6 oder 7, wobei die Kupplungsanordnung (60) eine erste und eine zweite Kupplung (62, 64) aufweist, die koaxial zu der Verbindungswelie (26) angeordnet sind, und wobei das erste und das zweite Losrad (42, 50) in axialer Richtung zwischen der ersten und der zweiten Kupplung (62, 64) angeordnet sind.

9. Antriebsstrang nach einem der Ansprüche 6 bis 8, wobei das erste Losrad (42) mit einem ersten Festrad (44) in Eingriff steht, wobei das zweite Losrad (50) mit einem zweiten Festrad (52) in Eingriff steht, wobei das erste und das zweite Festrad (44, 52) an einer Zwischenwelle (46) festgelegt sind, und wobei an der Zwischenwelle (46) ein Antriebszahnrad (48) festgelegt ist, das mit einem Eingangsglied (40) des Differentials (16) in Eingriff steht.

10. Antriebsstrang nach Anspruch 9, wobei das zweite Antriebszahnrad (48) in axialer Richtung auf einer Seite des ersten und des zweiten Festrades (44, 52) angeordnet ist.

11. Antriebsstrang nach einem der Ansprüche 1 bis 10, wobei die Kupplungsanordnung (60) hydraulisch betätigt und/oder gekühlt ist.

## Claims

1. Drive train (10) for a motor vehicle (11), having
- a first electric machine (12) for the provision of drive power, the first electric machine (12) being connected to an electric energy store (32);
- a differential (16) which can distribute drive power to two driven wheels (18L, 18R) or axles of the motor vehicle (11);
- a first transmission arrangement (14) which connects the first electric machine (12) to the differential (16);
- an internal combustion engine (20);
- a second electric machine (24) which is coupled to the internal combustion engine (20), in order to charge the electric energy store (32) in a generator mode; and
- a second transmission arrangement (22) which connects the internal combustion engine (20) to the differential (16);
the second transmission arrangement (22) having a first gear stage (G1) and a second gear stage (G2) which can be switched alternately by means of a clutch arrangement (60) for the transmission of drive power from the internal combustion engine (20) to the differential (16), **characterized in that** the transmission ratios of the first and the second gear stage (G1, G2) are selected in such a way that a drive of the vehicle (11) by means of the internal combustion engine (20) is possible in normal operation only at vehicle speeds of higher than 30 km/h.

2. Drive train according to Claim 1, the clutch arrangement (60) having a first clutch (62) and a second clutch (64).

3. Drive train according to Claim 2, the first and/or the second clutch (62, 64) having a positively locking shifting clutch.

4. Drive train according to one of Claims 1 to 3, the clutch arrangement (60) being arranged coaxially with respect to a connecting shaft (26), by means of which the second electric machine (24) and the internal combustion engine (20) are coupled to one another.

5. Drive train according to one of Claims 1 to 4, the second electric machine (24) being connected fixedly to an output shaft of the internal combustion engine (20) so as to rotate with it.

6. Drive train according to one of Claims 1 to 5, the second transmission arrangement (22) having a first movable gear (42) which is assigned to the first gear stage (G1) and a second movable gear (50) which is assigned to the second gear stage (G2), the first and the second movable gear (42, 50) being arranged coaxially with respect to a connecting shaft (26), by means of which the second electric machine (24) and the internal combustion engine (20) are coupled to one another.

7. Drive train according to Claim 6, the first and the second movable gear (42, 50) being rotatably mounted directly on the connecting shaft (26).

8. Drive train according to Claim 6 or 7, the clutch arrangement (60) having a first and a second clutch (62, 64) which are arranged coaxially with respect to the connecting shaft (26), and the first and the second movable gear (42, 50) being arranged in the axial direction between the first and the second clutch (62, 64).

9. Drive train according to one of Claims 6 to 8, the first movable gear (42) being in engagement with a first fixed gear (44), the second movable gear (50) being in engagement with a second fixed gear (52), the first and the second fixed gear (44, 52) being fixed on an intermediate shaft (46) and a drive gearwheel (48) which is in engagement with an input member (40) of the differential (16) being fixed on the intermediate shaft (46).

10. Drive train according to Claim 9, the second drive gearwheel (48) being arranged in the axial direction on one side of the first and the second fixed gear (44, 52).

11. Drive train according to one of Claims 1 to 10, the clutch arrangement (60) being actuated and/or cooled hydraulically.

## Revendications

1. Chaîne cinématique (10) pour un véhicule automobile (11), avec
- une première machine électrique (12) pour la fourniture de puissance d'entraînement, dans laquelle la première machine électrique (12) est reliée à un accumulateur d'énergie électrique (32);
- un différentiel (16), qui peut répartir la puissance d'entraînement sur deux roues entraînées (18L, 18R) ou deux essieux du véhicule automobile (11);
- un premier agencement de boîte de vitesses (14), qui relie la première machine électrique (12) au différentiel (16);
- un moteur à combustion interne (20);
- une seconde machine électrique (24), qui est couplée au moteur à combustion interne (20), afin de charger l'accumulateur d'énergie électrique (32) dans un fonctionnement en générateur; et
- un second agencement de boîte de vitesses (22), qui relie le moteur à combustion interne (20) au différentiel (16),
dans laquelle le second agencement de boîte de vitesses (22) présente un premier rapport (G1) et un second rapport (G2), qui peuvent être enclenchés en alternance au moyen d'un dispositif d'embrayage (60) pour la transmission de la puissance d'entraînement du moteur à combustion interne (20) au différentiel (16),
**caractérisée en ce que** les rapports de transmission du premier et du second rapports (G1, G2) sont choisis de telle manière qu'un entraînement du véhicule (11) au moyen du moteur à combustion interne (20) ne soit par destination possible que pour des vitesses du véhicule supérieures à 30 km/h.

2. Chaîne cinématique selon la revendication 1, dans laquelle le dispositif d'embrayage (60) présente un premier embrayage (62) et un second embrayage (64).

3. Chaîne cinématique selon la revendication 2, dans laquelle le premier et/ou le second embrayage (62, 64) présente un embrayage par emboîtement.

4. Chaîne cinématique selon l'une quelconque des revendications 1 à 3, dans laquelle le dispositif d'embrayage (60) est disposé de façon coaxiale à un arbre de liaison (26), au moyen duquel la seconde machine électrique (24) et le moteur à combustion interne (20) sont couplés l'un à l'autre.

5. Chaîne cinématique selon l'une quelconque des revendications 1 à 4, dans laquelle la seconde machine électrique (24) est reliée de façon calée en rotation à un arbre de sortie du moteur à combustion interne (20).

6. Chaîne cinématique selon l'une quelconque des revendications 1 à 5, dans laquelle le second agencement de boîte de vitesses (22) présente une première roue folle (42), qui est associée au premier rapport de vitesse (G1), et une seconde roue folle (50), qui est associée au second rapport de vitesse (G2), dans laquelle la première et la seconde roues folles (42, 50) sont disposées de façon coaxiale à un arbre de liaison (26), au moyen duquel la seconde machine électrique (24) et le moteur à combustion interne (20) sont couplés l'un à l'autre.

7. Chaîne cinématique selon la revendication 6, dans laquelle la première et la seconde roues folles (42, 50) sont montées de façon rotative directement sur l'arbre de liaison (26).

8. Chaîne cinématique selon une revendication 6 ou 7, dans laquelle le dispositif d'embrayage (60) présente un premier et un second embrayages (62, 64), qui sont disposés de façon coaxiale à l'arbre de liaison (26), et dans laquelle la première et la seconde roues folles (42, 50) sont disposées en direction axiale entre le premier et le second embrayages (62, 64).

9. Chaîne cinématique selon l'une quelconque des revendications 6 à 8, dans laquelle la première roue folle (42) est en prise avec une première roue fixe (44), dans laquelle la seconde roue folle (50) est en prise avec une seconde roue fixe (52), dans laquelle la première et la seconde roues fixes (44, 52) sont calées sur un arbre intermédiaire (46), et dans laquelle une roue dentée d'entraînement (48) est calée sur l'arbre intermédiaire (46) et est en prise avec un organe d'entrée (40) du différentiel (16).

10. Chaîne cinématique selon la revendication 9, dans laquelle la seconde roue dentée d'entraînement (48) est disposée en direction axiale sur un côté de la première et de la seconde roues fixes (44, 52).

11. Chaîne cinématique selon l'une quelconque des revendications 1 à 10, dans laquelle le dispositif d'embrayage (60) est actionné et/ou est refroidi de façon hydraulique.
